Europäisches Patentamt

European Patent Office

Office européen des brevets

(11) Veröffentlichungsnummer: **0 082 215**
**B1**

# (12) EUROPÄISCHE PATENTSCHRIFT

(45) Veröffentlichungstag der Patentschrift: **07.05.86**

(21) Anmeldenummer: **81110696.2**

(22) Anmeldetag: **22.12.81**

(51) Int. Cl.⁴: **B 23 B 5/12,** B 21 C 43/04,
B 21 C 47/26

(54) **Verfahren und Vorrichtung zum Schälen von Draht.**

(43) Veröffentlichungstag der Anmeldung:
**29.06.83 Patentblatt 83/26**

(45) Bekanntmachung des Hinweises auf die
Patenterteilung:
**07.05.86 Patentblatt 86/19**

(84) Benannte Vertragsstaaten:
**AT DE FR GB IT**

(56) Entgegenhaltungen:
**DE-A-2 328 109**
**DE-A-2 656 258**
**DE-B-1 063 008**
**DE-C- 959 007**
**US-A-3 107 455**

(73) Patentinhaber: **Lindemann, Wolfgang, Dr.-Ing.,
Dipl.-Phys.**
**Grosse Kurfürstenstrasse 15**
**D-4800 Bielefeld 1 (DE)**

(72) Erfinder: **Lindemann, Wolfgang, Dr. Ing. Dipl.-
Phys.**
**Grosse Kurfürstenstrasse 15**
**D-4800 Bielefeld 1 (DE)**
Erfinder: **Lindemann, Hans**
**Zittauerstrasse 15**
**D-4800 Bielefeld 1 (DE)**

(74) Vertreter: **Lesser, Karl-Bolko, Dipl.-Ing.**
**European Patent Attorney**
**Johanneskirchnerstrasse 149a**
**D-8000 München 81 (DE)**

**Beschreibung**

Die Erfindung betrifft ein Verfahren zum Schälen von Draht gemäß Oberbegriff des Anspruches 1 und eine Vorrichtung zum Schälen von Draht.

Es sind schon die verschiedensten Verfahren und Vorrichtungen zum Schälen von Draht, insbesondere solchem, dem aus dem Walzwerk kommend die Walzhaut entfernt werden soll, um eine einwandfreie Drahtoberfläche zu erhalten, bekannt geworden.

So ist es aus der DE—PS 959 007 bekannt, den im Walzwerk auf eine Haspel aufgesickelten Draht von dieser zum Weiterverarbeiten wieder abzuwickeln, in einer Richtvorrichtung gerade zu richten und den dann geraden Draht in einer Schälmaschine zu schälen. Nach dem Schälen wird der Draht noch poliert und danach in Drahtstücke bestimmter Länge unterteilt.

Gemäß dem DE—GM 1 707 690 wird der Draht von einer Haspel abgewickelt, gerade gerichtet, geschält, poliert, vorgekrümmt und auf einer zweiten Haspel wieder afugewickelt.

Ähnlich wird bei dem Verfahren gemäß der DE—AS 1 063 008 vorgegangen, bei dem darüberhinaus der von der Abwickelhaspel kommende Draht um zwei Umlenkrollen gelenkt wird, um dann in vertikaler Richtung nacheinander eine Richtstrecke, einen um eine vertikale Achse umlaufenden Schälkopf, eine Poliereinrichtung. und eine Vorkrümmeinrichtung zu durchlaufen, um wieder aufgehaspelt zu werden.

Allen vorbeschriebenen Verfahren und Vorrichtungen ist gemeinsam, daß der Draht vor dem Schälen gerade gerichted wird, was nicht nur einen großen maschinentechnischen Aufwand, sondern auch viel Energie und Zeit kostet.

Man ist bisher davon ausgegangen, daß der Draht zum spanenden Bearbeiten immer gerade, insbesondere gerade gerichtet sine muß.

Die läßt sich auch aus der allgemeineren Drahtbearbeitung, z.B. dem Loopro-Verfahren (DRAHT-Fachzeitschrift 1972/10, Seiten 647 ff.) herleiten. Bei diesem Loopro-Verfahren wird der Draht in Schleifen abgelegt und je nachdem, um welches Material es sich handelt z.B. geglüht, gebeizt, beschichtet od. dgl.. Bevor der aus dem Walzwerk kommende Draht jedoch diesen Verfahrensschritten in Schleifenform unterworfen wird, wird er entzundert. Um den Draht zu entzundern oder zu ziehen, wird der gehaspelte Draht entweickelt, d.h. in eine gerade Form gebracht und nach dem Entzundern oder Ziehen wieder in eine Schleifenform gebracht, um weiter bearbeitet zu werden. Das Entzundern oder Ziehen wird also auch hier nur bei einem geraden Draht vorgenommen.

Der Erfindung liegt nun die Aufgabe zugrunde, ein gattungsgemäßes Verfahren und eine Vorrichtung zum Schälen von Draht zu schaffen, bei denen der Draht mit weniger Aufwand geschält werden kann.

Die Erfindung geht von der vom Schälen von Stangenmaterial bekannten Erkenntnis aus, daß nicht notwndig ist, ein zu schälendes Material gerade auszurichten, sondern das Material auch gekrümmt vorliegen kann, wenn diese Krümmung bestimmte Voraussetzungen erfült, die z.B. in der DE—OS 23 28 109 beschrieben sind. Die DE—OS 23 28 109 befaßt sich allerdings mit dem Problem der Aufnahme des beim Schälen auf das Material ausgeübten Drehmomentes und löst dieses Problem dadurch, daß das zü schälende, stamgenförmige Gut mindestens in einem Teil seines Quersohnitts vor dem Schälbereich über die Streckgrenze hinaus verformt wird. Dies wird bei dem bekannten Verfahren dadurch erreicht, daß das zu bearbeitende Gut in einer Ebene so gebogen wird, daß sich seine Achse auf einer mindestens viertelkreisförmigen, ortsfesten Bahn bewegen kann. Nach dem Schälen verläßt das Gut den Schälbereuch entweder gerade oder es wird die zuvor gewählte Krümmung auch bei dem geschälten Material bis zu dem Punkt aufrechterhalten, an dem vom Schälen her kein Drehmoment mehr auf das Gut ausgeübt wird, worauf das Gut wieder gerade gebogen wird.

Zum Biegen, Führen und Rückbiegen sind bei dieser bekannten Vorrichtung eine Vielzahl von zum Teil angetriebenen Rollen oder Walzen notwendig.

Die der Erfindung zugrundeliegende Aufgabe wird durch das erfindungsgemäße Verfahren gemäß Anspruch 1 und die Vorrichtung gemäß Anspruch 10. Ein Richten mittels einer Anzahl Richtrollen oder -walzen ist für das Schälen nicht notwendig. Darüberhinaus kann das beim Schälen auf den Draht ausgeübte Drehmoment von diesem direkt aufgenommen werden, weshalb man sich mit großer Anpreßkraft auf den Draht drükende, und insbesondere auf dem geschälten Draht Laufspuren hinterlassende Verdrehsicherungen ersparen kann. Außerdem kann auch ein Großteil der sonst notwendigen Führungsmittel eingespart werden.

Vorzugsweise weist dabei der Draht beim Schälen eine Krümmung auf, die im wesentlichen der Krümmung des Drahtes im Coil entspricht. Je nach Drahtdurchmesser und Krümmungsradius wird der Draht mehr oder weniger plastisch verformt bzw. liegt mehr oder weniger plastisch verformt als Coil vor.

Je nachdem, in welcher Form der zu schälende Draht vorliegt bzw. in welcher Form der geschälte Draht vorliegen soll, sind verschiedene Verfahrensschritte auszuführen.

So ist es möglich, den Draht direkt vom Walzwerk kommend, also in im wesentlichen gerader Form, in die Schälmaschine einzuführen, ihn in dieser in Wendelform zu krümmen, bevor er dem Schälvorgang unterworfen wird, um erst danach zu einem Coil aufgewickelt zu werden.

Es ist aber auch möglich, zu einem Coil aufgehaspelten Draht in die Schälmaschine in Wendelform gekrümmt einzuführen, und den Draht nach dem Schälen zu richten und auf vorbestimmte, handelsübliche Längen zu zertrennen.

Bevorzugt wird aber der zu einem Coil aufgehaspelte Draht "im Coil" geschält und danach wieder zu einem Coil abgelegt, wobei die Krümmung des Drahtes während des gesamten Verfahrensablaufes im wesentlichen nicht verändert wird.

Es muß lediglich dafür gesorgt werden, daß der Schälkopf, durch den gerade eine Drahtwindung geschält wird, von deren benachbarter Drahtwindung bzw. von den beiden benachbarten Drahtwindungen ausreichend beabstandet ist, d.h., die einzelnen Drahtwindungen ausreichend vereinzelt werden.

Die wird am einfachsten dadurch erreicht, daß der in Wendelform vorliegende, gekrümmte Draht auf einer schraubenförmigen Kurvenbahn geführt wird, die bevorzugterwwise auf der Mantelfläche eines Teil-Ringtorus geführt wird, wobei das Schälen im Bereich des größten Durchmesser dieses Torus durchgeführt wird. Der Coil wird also derart auseinandergezogen, daß die Achse des auseinandergezogenen Coils gekrümmt ist und einen im wesentlichen konstanten Radius aufweist, der vorzugsweise etwas größer ist, als der Durchmesser des Coils. Dabei geht diese gekrümmte Achse in die vertikale Achse bzw. in die vertikalen Achsen eines Ab- bzw./und eines Aufwickeltellers über. Diese Abund Aufwickelteller drehen sich um ihre vertikalen Achsen. Bei Vorhandensein sowohl eines Ab-, als auch eines Aufwickeltellers drehen sich diese in zueinander entgegengesetztem Drehsinn. Der Draht durchläuft dann eine schraubenförmige, auf der Mantelfläche eines Halb-Ringtorus liegende Kurvenbahn. Am Außenumfang des Torus befindliche Drahtabschnitte weisen den größten Abstand voneinander auf. Vorzugsweise in dem obersten Punkt der Drahtbahn ist der umlaufende Schälkopf angeordnet, durch den der Draht hindurch geführt wird. Unmittelbar vor und unmittelbar hinter dem Schälkopf können noch Führungsmittel vorgesehen sein, die die gerade zu schälende Drahtwindung im Schälkopf zentrieren. Diese Führungsmittel haben die wesentliche Aufgabe, die gerade den Schälkopf durchlaufende Drahtwindung in einer Ebene zu halten bzw. zu führen, in der der Mittelpunkt der Schälmesser des Schälkopfes liegt. Den Führungsmitteln kommt somit im wesentlichen eine Stützfunktion zu.

Der gewickelte Draht kann aber auch um eine gerade Achse schraubenförmig geführt sein, wobei dann z.B. die einzelnen Windungen stetig voneinander mehr beabstandet werden und dann, nach dem Punkt, in dem der umlaufende Schälkopf angeordnet ist, wieder stetig einander näher gebracht werden. Die Achse dieser Schraube kann auch vertikal angeordnet sein, wobei dann der Draht von oben zugeführt wird, durch sein Eigengewicht den notwendigen Abstand für die Aufnahme des Schälkopfes zwischem den einzelnen Windungen bildet und dann unten wieder aufgenommen wird.

Beiden Ausbildungsformen ist gemeinsam, daß der Draht auf einer ortsfesten, schraubenförmigen Kurvenbahn geführt wird. Außerdem muß der Draht jeweils so vereinzelt werden, daß mindestens an einer Stelle ein Stück einer Drahtwindung von zwei benachbarten Stücken bebachbarter Windungen so weit entfernt ist, daß ein das erste Windungsstück schälender Schälkopf zwischen beiden anderen Windungsstücken aufgenommen werden kann. Die Drehachse des Schälkopfes und die Coilachse sollen eine gemeinsame Normale aufweisen, wobei diese beiden Achsen um den halben Coildurchmesser voneinander beabstandet sind.

Bei den Ausführungsformen bie denen der Draht entweder gerade zugeführt ofer gerade abgeführt wird, liegt der Draht nur in einem Teilbereich in entsprechender Wendelform vor. Dieser Teilbereich erstreckt sich aber jewels über den Schälbereich hinaus auf die Seite des geraden Drahtes. Das heißt aber, daß die gerade Zuführung bzw. Abführung des Drahtes mit der Achse des Schälkopfes einen Winkel einschließt, der zwischen 10° und 30°, vorzugsweise im Bereich von 10° bis 15°, liegt. Im unmittelbaren Schälbereich sollen aber bei allen Ausführungsformen dieselben Bedingungen herrschen.

Gemäß einer Ausführungsform der Erfindung liegt darüberhinaus die Achse des Drahtcoils in der Schälebene des Schälkopfes.

Um den Draht immer auf derselben Bahn führen zu können, und um so die Führungsmittel zu entlasten, sind der Ab- und/bzw. der Aufwickelteller vorzugsweise automatisch in der Höhe verstellbar, was z.B. dudurch erreicht werden kann, daß die Teller je von einer Feder nach oben gedrückt werden, wobei die jeweilige Feder je nach Menge des vorhandenen Drahtes mehr oder weniger weit zusammengepreßt wird.

Vorzugsweise sind unmittelbar vor und/oder hinter dem Schälkopf Vorschubeinrichtungen vorgesehen, die z.B. durch die als angetriebene Vorschubrollen ausgebildeten Führungen oder als angetriebene Vorschubrollen ausgebildeten Biegeeinrichtungen gebildet sein können.

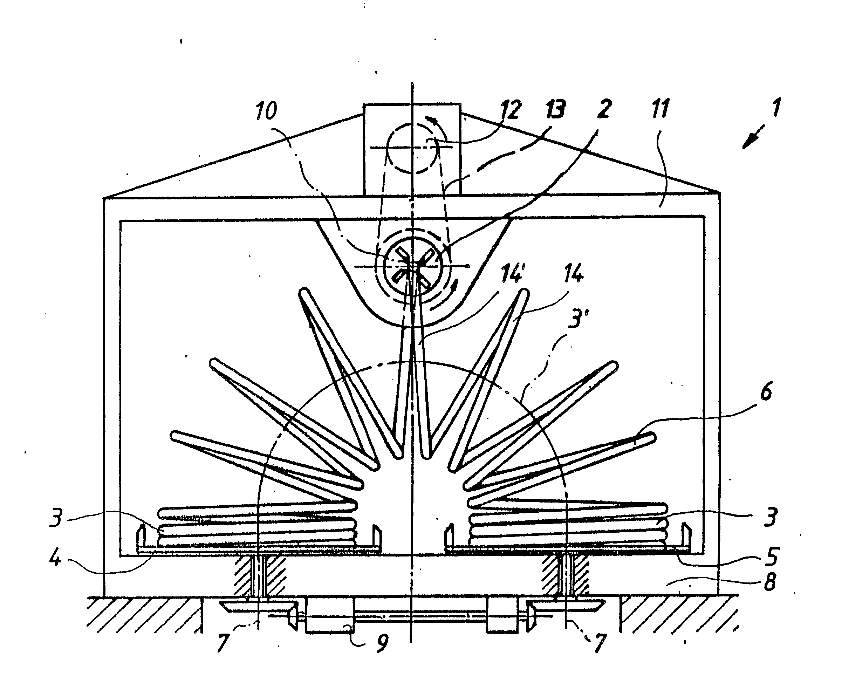

Weitere Vorteile der Erfindung ergeben sich aus einem im folgenden anhand der Zeichnung erläuterten Ausführungsbeispiel. Die einzige Figur der Zeichnung zeigt schematisch den Aufbau einer Schälmaschine für Draht, der "im Coil" geschält wird, d.h., es wird von einem Coil abgenommen, in Spiralform geschält, wobei die Windungen voneinander vereinzelt und zu einem zweiten Coil abgelegt werden.

Eine Drahtschälmaschine 1 besteht im wesentlichen aus einem angetriebenem Schälkopf 2, einem ein zu schälendes Drahtcoil 3 aufnehmenden Abwickelteller 4 und einem das geschälte Drahtcoil 3 aufnehmenden Aufwickelteller 5.

Wenngleich hier der Draht 6 weder im eigentlichen Sinne ab, noch aufgewickelt wird, soll hier trotzdem von einem Ab- bzw. einem Aufwickelteller 4 bzw. 5 gesprochen werden, da beide im wesentlichen den gleichen Aufbau aufweisen, wie bekannte Ab- bzw. Aufwickelteller. Die Achsen 7 der Ab- bzw. Aufwickelteller 4 bzw. 5 liegen hier in einer vertikalen Ebene—hier in der Zeichenebene—und sind hier um einen Betrag voneinander beabstandet, der etwa dem 1,25-fachen des Außendurchmessers eines Tallers 4 bzw. 5 entspricht. Auf den Tellern 4 bzw. 5 sind Drahtcoile 3 ablegbar bzw. abgelegt, deren Außendurchmesser hier zwischen 1000 und 2000 mm beträgt. Beide Teller 4 bzw. 5 sind hier auf einem gemeinsamen Maschinenbett 8 drehbar gelagert und von einem hier beiden Tellern 4 bzw. 5 gemeinsamen Antriebsmotor 9 in zueinander entgegengesetzten Drehsinnen antreibbar.

In der Ebene der Drehachsen 7 der Teller 4 und 5 und mittig zwischen diesen ist oberhalb der Teller 4 und 5, von diesen etwa um das 1,5-fache des Coildurchmessers beabstandet, der umlaufende Schälkopf 2 so angeordnet, daß dessen Drehachse 10 etwa senkrecht auf der zuvorgenannten Ebene der Tellerachsen 7 liegt. Der Schälkopf 2 ist dabei in einem Traggestell 11 drehbar gelagert, wobei das Traggestell 11 hier mit dem Maschinenbett 8 verbunden ist.

Oberhalb des Schälkopfes 2 ist auf dem Traggestell 11 ein Antriebsmotor 12 für Schälkopf 2 angeordnet, der mit diesem gemäß der schematischen Zeichnung über eine Zahnkette 13 oder einen Treibriemen in Wirkverbindung steht. Es kann aber auch eine Antriebsart gewählt werden, die in der DE—OS 3 044 174 beschrieben ist, d.h., der Schälkopf 2 besteht im wesentlichen aus einem Flansch, an dessen Außenumfang ein Außenzahnrad angeordnet ist, das mit zwei oder mehr gleichmäßig über den Umfang verteilten, je mit einem Antriebsmotor verbundenen Antriebszahnrädern kämmt. Einer der Antriebsmotor liegt dann vertikal unter dem Schälkopf 2 in dem Hohlraum des schraubenförmig geführten Drahtcoils 3, dessen Ausbildung im folgenden noch näher beschrieben wird.

Der von dem Abwickeleteller 4 in Spiralform abgezogene Draht 6 bewegt sich auf seinem Weg zu dem Aufwickelteller 5 schraubenlinienförmig auf der Hüllkurve eines halben Ringtorus, wobei sich die einzelnen Drahtabschnitte immer auf der gleichen schraubenlinienförmigen Kurve bewegen, wobei die Achse der "Schraube" halbkreisförmig gebogen ist. Dies hat zur Folge, daß die einzelnen Windungen 14 des Drahtes 6 auf dem Außenumfang der Bahn viel weiter voneinander beabstandet sind, als auf dem Innenumfang der Bahn. Der Abstand der Windungen 14 voneinander auf dem Außenumfang der Bahn bestimmt sich im wesentlichen nach den Abmessungen des Schälkopfes 2 einschließlich dessen Antriebstechnik, d.h., der Abstand der Windungen 14 auf dem Außenumfang muß größer sein als die in der Zeichenebene halbe Breite des Schälkopfes 2 und gegebenenfalls seines Antriebs 12. Durch die kreisförmige Biegung der Coilachse 3' in diesem Bereich kann aber der mittlere Abstand der Windungen 14 voneinander kleiner gewählt werden, als wenn man den Coil in einer geraden Achse auseinanderziehen würde, um den Draht 6 dann zu schälen.

In der Zeichnung nicht dargestellt sind vor und hinter der Zeichenebene liegende Führungen.

Diese Führungen haben die Aufgabe, den Draht 6 in dem Schälkopf 2 zu zentrieren, damit der Draht um seine Längsachse gleichmäßig geschält wird. Wenngleich der gekrümmte Draht 6 eine bestimmte Lage einnimmt, ist durch Versuche festgestellt worden, daß dudurch, daß der Draht vor dem Schälen nicht gerichtet wurde, es trotzdem notwendig ist, den Draht 6, d.h., die Drahtwindung 14' unmittelbar vor und unmittelbar hinter dem Schälkopf zu zentrieren. Das beim Schälen auf den Draht ausgeübte Drehmoment wird durch den gekrümmten Draht aufgenommen, weshalb den Führungen auch eine Stützfunktion zukommt, wozu aber gegenüber bekannten Drahtschälmaschinen ein viel geringerer maschineller Aufwand ausreichend ist, um ein optimales Schälergebnis zu erhalten.

Aufgrund Steifigkeit des gewickelten Drahtes 6 und des immer identischen Verlaufs des Drahtes auf einer genau bestimmten Kurve sind diese Führungsmittel an sich ausreichend. Es können aber darüberhinaus noch weitere Führungsmittel im Bereich der gerade zu schälenden bzw. der gerade geschälten Drahtwindung 14' vorgesehen sein, die z.B. den Draht 6 etwa in einem Viertelkreis vor und in einem Viertelkreis hinter dem Schälbereich zusätzlich führen.

Wird der Draht gerade zugeführt oder gerade abgeführt, so sind noch nicht dargestellte Biegeeinrichtungen vor bzw. hinter der Zeichenebene erfolderlich, die z.B. aus drei in Vorschubrichtung des Drahtes gesehen hintereinander angeordneten, abwechselnd auf sich gegenüberliegenden Seiten des Drahtes angeordneten Rollen bestehen, wobei die mittlere Rolle innerhalb der Drahtwindung 14 und die beiden außenliegenden Rollen außerhald der Drahtwindung 14 zu liegen kommen.

Eine oder mehrere der Führungsrollen und bzw. der Biegerollen sind dabei als antreibare Vorschubrollen ausgebildet.

Der Ab- und der Aufwickelteller 4 und 5 sind automatisch in der Höhe verstellbar (nicht dargestellt), damit die jeweils erste Windung 14 den abgelegten Coil 3 immer in derselben Höhe verläßt, ebenso wie die jeweils letzte freie Windung 14 auf den Coil 3 des Aufwickeltellers 5 immer in der gleichen Höhe abgelegt wird. Dadurch wird ein räumlich identischer Verlauf der Kurvenbahn für das gesamte Coil 3 sichergestellt. Dies erreicht man z.B. dadurch, daß der Ab- und der Aufwickelteller 4 und 5 je von einer Feder nach oben gedrückt werden, die von dem Gewicht des aufliegenden Coils 3, daß sich im Laufe der Zeit ändert, zusammengedrückt wird.

Mit der vorbeschriebenen Drahtschälmaschine 1 lassen sich Drahtcoils 3 mit einem Gewicht von 1 bis 2 Tonnen und einem Drahtdurchmesser von bis zu 35 mm einwandfrei und ohne großen maschinentechnischen Aufwand schälen.

**Patentansprüche**

1. Verfahren zum Schälen von zu einem Coil aufgehaspeltem und/oder auf ein Coil (3) aufzuh-

aspelndem Draht (6) in einer Schälanlage (2, 12, 13), dadurch gekennzeichnet, daß der Draht in Wendelform gekrümmt geschält wird, wobei die Drahtwindungen so vereinzelt werden, daß mindestens an einer Stelle ein Stück einer Drahtwindung von zwei benachbarten Stücken benachbarter Windungen so weit entfernt ist, daß ein das erste Windungsstück schälender Schälkopf zwischen den beiden anderen Windungsstücken aufgenommen werden kann.

2. Verfahren nach Anspruch 1, dadurch gekennzeichnet, daß der Draht beim Schälen eine Krümmung aufweist, die im wesentlichen der Krümmung des Drahtes im Coil entspricht.

3. Verfahren nach Anspruch 1 oder 2, dadurch gekennzeichnet, daß der gerade zugeführte Draht unmittelbar vor dem Schälvorgang zu seiner Wendelform gekrümmt wird.

4. Verfahren nach Anspruch 1 oder 2, dadurch gekennzeichnet, daß von einem Coil abgenommener, in Wendelform vorliegender Draht unmittelbar nach dem Schälen gerade gebogen, vorzugsweise gerichtet wird.

5. Verfahren nach Anspruch 1 oder 2, dadurch gekennzeichnet, daß von einem Coil abgenommener, in Wendelform vorliegender Draht nach dem Schälen in Wendelform zu einem weiteren Coil aufgenommen wird.

6. Verfahren nach einem der vorhergehenden Ansprüche, dadurch gekennzeichnet, daß die einzelnen, sich bewegenden Drahtwindungen (14) insbesondere unmittelbar vor und/bzw. unmittelbar nach dem Schälten voneinander vereinzelt werden.

7. Verfahren nach einem der vorhergehenden Ansprüche, dadurch gekennzeichnet, daß der in Wendelform vorliegende Draht auf einer schraubenförmigen Kurvenbahn (3') geführt wird.

8. Verfahren nach Anspruch 7, dadurch gekennzeichnet, daß die Drahtwindungen schraubenförmig auf der Mantelfläche eines Teil-Ringtorus geführt werden.

9. Verfahren nach einem der vorhergehenden Ansprüche, dadurch gekennzeichnet, daß der Draht unmittelbar vor und/oder unmittelbar nach dem Schälen geführt wird.

10. Vorrichtung zum Schälen von Draht (6), der beim Schälen wendelformig mit voneinander vereinzelten Drahtwindungen vorliegt, mit einem umlaufenden Schälkopf (2), mit einem ein zu schälendes Drahtcoil (3) aufnehmenden Abwickelteller (4) und/bzw. mit einem das geschälte Drahtcoil (3) aufnehmenden Aufwickelteller (5), wobei die Achse bzw. die Achsen (7) des Abwickeltellers (4) bzw./und des Aufwickeltellers (5) in einer Ebene liegen, in der auch die Achse (3') der jeweiligen Drahtwindung (14') beim Schälen angeordnet ist.

11. Vorrichtung nach Anspruch 10, dadurch gekennzeichnet, daß die Drehachse (10) des Schälkopfes (2) und die Achse (3') der gerade geschälten Drahtwindung (14') eine gemeinsame Normale aufweisen.

12. Vorrichtung nach Anspruch 10 oder 11, dadurch gekennzeichnet, daß die Achse (10) des Schälkopfes (2) von der Achse der gerade geschälten Drahtwindung (14') um den halben Windungsdurchmesser beabstandet ist.

13. Vorrichtung nach einem der Ansprüche 10 bis 12, dadurch gekennzeichnet, daß die Achse (3') der Drahtwindungen (14) in der Schälebene des Schälkopfes (2) liegt.

14. Vorrichtung nach einem der Anspruch 10 bis 13, dadurch gekennzeichnet, daß die Achse (3') der Drahtwindungen (14) mindestens viertelkreisförmig gebogen ist und die Achse bzw. die Achsen (7) des Abwickeltellers (4) bzw./und des Aufwickeltellers (5) darin übergeht bzw. übergehen.

15. Vorrichtung nach einem der Ansprüche 10 bis 14 mit einem Abwickelteller (4) und einem Aufwickelteller (5), dadurch gekennzeichnet, daß die Achsen (7) des Abwickeltellers (4) und des Aufwickeltellers (5) parallel zueinander, voneinander beabstandet angeordnet sind.

16. Vorrichtung nach Anspruch 15, dadurch gekennzeichnet, daß der Abstand der Achsen (7) des Abwickeltellers (4) und des Aufwickeltellers (5) etwa dem 1,5-fachen Durchmesser der Teller (4 bzw. 5) entspricht.

17. Vorrichtung nach Anspruch 15 oder 16, dadurch gekennzeichnet, daß der Abwickelteller (4) und der Aufwickelteller (5) in zueinander entgegengesetztem Drehsinn synchron antreibbar sind.

18. Vorrichtung nach einem der Ansprüche 10 bis 17, dadurch gekennzeichnet, daß die Achse (10) des Schälkopfes (2) im wesentlichen senkrecht auf der durch die Achse (3') der Drahtwindungen (14') gebildeten Ebene steht.

19. Vorrichtung nach einem der Ansprüche 10 bis 18, dadurch gekennzeichnet, daß ein Maschinenbett (8) ein Traggestell (11) aufnimmt, an dem der Schälkopf (2) und dessen Antrieb (12) angeordnet ist.

20. Vorrichtung nach einem der Ansprüche 10 bis 19, dadurch gekennzeichnet, daß der Abwickelteller (4) bzw./und der Aufwickelteller (5) auf dem auch den diesen bzw. diese antreibenden Antriebsmotor (9) aufnehmenden Maschinenbett (8) gelagert ist bzw. sind.

21 Vorrichtung nach einem der Ansprüche 10 bis 20, dadurch gekennzeichnet, daß unmittelbar vor und/oder unmittelbar hinter dem Schälkopf (2) im Durchmesser und in der Lage verstellbare Führungen für die zu schälende bzw. geschälte Drahtwindung (14') angeordnet sind.

22. Vorrichtung nach Anspruch 21, dadurch gekennzeichnet, daß die Führungen den Draht (6) im Schälkopf (2) zentrieren.

23. Vorrichtung nach einem der Ansprüche 10 bis 22, dadurch gekennzeichnet, daß in Richtung der Drahtwindung (14') vor oder hinter dem Schälkopf (2) dem Krümmen des Drahtes (6) dienende Einrichtungen angeordnet sind.

24. Vorrichtung nach einem der Ansprüche 10 bis 23, dadurch gekennzeichnet, daß vor und/oder hinter dem Schälkopf (2) Vorschubeinrichtungen für den Draht (6) vorgesehen sind, die auf die gerade den Schälkopf (2) durchlaufende Drahtwindung (14') einwirken.

## Revendications

1. Procédé pour écroûter un fil métallique (6) enroulé en une bobine et/ou à enrouler en une bobine (3) dans une installation d'écroûtage (2, 12, 13), caractérisé en ce que le fil métallique est écroûté à l'état curbé hélicoîdalement, les spires du fil métallique étant espacées de telle sorte qu'au moins à un endroit, une partie d'une spire du fil métallique soit éloignée de deux parties voisines des spires voisines dans une mesure telle qu'une tête à écroûter écroûtant la première spire de fil métallique puisse être admise entre les deux autres parties de spires.

2. Procédé selon la revendication 1, caractérisé en ce que le fil métallique présente, durant l'écroûtage, une courbure qui correspond en substance à celle du fil métallique en bobine.

3. Procédé selon l'une quelconque des revendications 1 et 2, caractérisé en ce le fil métallique amené rectilignement est courbé sous sa forme hélicoîdale directement avant l'opération d'écroûtage.

4. Procédé selon l'une quelconque des revendications 1 et 2, caractérisé en ce que le fil métallique présentant une forme hélicoîdale et prélevé d'une bobine est plié rectilignement directement après l'écroûtage, de préférence dressé.

5. Procédé selon l'une quelconque des revendications 1 et 2, caractérisé en ce que le fil métallique se présentant sous une forme hélicoîdale et prélevé d'une bobine est déposé après l'écroûtage sous une forme hélicoîdale en une autre bobine.

6. Procédé selon l'une quelconque des revendications 1 à 5, caractérisé en ce que les différentes spires (14) du fil métallique en déplacement sont espacées les unes des autres en particulier directement avant et/ou directement après l'écroûtage.

7. Procédé selon l'une quelconque des revendications 1 à 6, caractérisé en ce que le fil métallique présentant une forme en hélice est conduit sur une voie courbe hélicoîdale (3').

8. Procédé selon la revendication 7, caractérisé en ce que les spires de fil métallique sont conduites hélicoîdalement sur la surface d'enveloppe d'un tore annulaire partiel.

9. Procédé selon l'une quelconque des revendications 1 à 8, caractérisé en ce que le fil métallique est conduite directement avant et/ou directement après l'écroûtage.

10. Dispositif d'écroûtage d'un fil métallique (6) dont les spires sont espacées les unes des autres hélicoîdalement au cours de l'écroûtage, caractérisé en ce qu'il comprend une tête à écroûter tournante (2), un plateau dérouleur (4) recevant la bobine de fil métallique (3) à écroûter et/ou un plateau enrouleur (5) recevant la bobine de fil métallique (3) écroûté, l'axe ou les axes (7) du plateau dérouleur (4) et/ou du plateau enrouleur (5) se situant dans un plan où se trouve également l'axe (3') de chaque spire de fil métallique (14') durant l'écroûtage.

11. Dispositif selon la revendication 10, caractérisé en ce que l'axe de rotation (10) de la tête à écroûter (2) et l'axe (3') de la spire de fil métallique (14') écroûtée rectiligne ont une normale commune.

12. Dispositif selon l'une quelconque des revendications 10 et 11, caractérisé en ce que l'axe (10) de la tête à écroûter (2) est distante d'un demi-diamètre de spire de l'axe de la spire de fil métallique (14') écroûtée rectiligne.

13. Dispositif selon l'une quelconque des revendications 10 à 12, caractérisé en ce que l'axe (3') des spires de fil métallique (14) se situe dans le plan d'écroûtage de la tête à écroûter (2).

14. Dispositif selon l'une quelconque des revendications 10 à 13, caractérisé en ce que l'axe (3') des spires de fil métallique (14) est courbé au moins sous la forme d'un quart de circonférence et en ce que l'axe ou les axes (7) du plateau dérouleur (4) et/ou du plateau enrouleur (5) se rattache ou sont rattachés à celuici.

15. Dispositif selon l'une quelconque des revendications 10 à 14, ;ourvu d'un plateau dérouleur (4) et d'un plateau enrouleur (5), caractérisé en ce que les axes (7) du plateau dérouleur (4) et du plateau enrouleur (5) sont disposés à l'état distant l'un de l'autre et sont parallèles entre eux.

16. Dispositif selon la revendication 15, caractérisé en ce que la distance des axes (7) du plateau dérouleur (4) et du plateau enrouleur (5) correspond approximativement à 1,5 fois le diamètre du plateau (4 ou 5).

17. Dispositif selon l'une quelconque des revendications 15 et 16, caractérisé en ce que le plateau dérouleur (4) et le plateau enrouleur (5) peuvent être entraînés synchroniquement dans des sens de rotation opposés l'un à l'autre.

18. Dispositif selon l'une quelconque des revendications 10 à 17, caractérisé en ce que l'axe (10) de la tête à écroûter (2) se situe en substance verticalement au plan formé par l'axe (3') des spires de fil métallique (14).

19. Dispositif selon l'une quelconque des revendications 10 à 18, caractérisé en ce qu'un banc de machine (8) soutient un cadre porteur (11) sur lequel est disposée la tête à écroûter (2) et sa commande (12).

20. Dispositif selon l'une quelconque des revendications 10 à 19, caractérisé en ce que le plateau dérouleur (4) et/ou le plateau enrouleur (5) est ou sont montés sur le banc de machine (8) recevant le moteur de commande (9) entraînant ce ou ces plateaux.

21. Dispositif selon l'une quelconque des revendications 10 à 20, caractérisé en ce que des guides mobiles diamétralement et déplaçables quant à la position, destinés à la spire de fil métallique (14') écroûtée ou à écroûter sont disposés directement devant et/ou directement après la tête à écroûter (2).

22. Dispositif selon la revendication 21, caractérisé en ce que les guides centrent le fil métallique (6) dans la tête à écroûter (2).

23. Dispositif selon l'une quelconque des revendications 10 à 22, caractérisé en ce que des appareils servant à courber le fil métallique (6) sont disposés dans la direction de la spire de fil métallique (14') avant ou après la tête à écroûter (2).

24. Dispositif selon l'une quelconque des revendications 10 à 23, caractérisé en ce qu'on a prévu, avant et/ou après la tête à écroûter (2), des appareils pour l'avance du fil métallique (6), lesquels agissent sur la spire de fil métallique (14') traversant rectilignement la tête à écroûter (2).

## Claims

1. Process for peeling wire (6) which is wound into a coil and/or is to be wound into a coil (3) in a peeling machine (2, 12, 13), characterised in that the wire is peeled whilst curved into a helical form, the turns of the wire being separated so that, at at least one point, a portion of a turn of wire is at such a spacing from two adjacent portions of adjacent turns that a peeling head peeling the first turn portion is able to be accommodated between the two other turn portions.

2. Process as claimed in claim 1, characterised in that during peeling the wire has a curvature which corresponds substantially to the curvature of the wire in the coil.

3. Process as claimed in claim 1 or 2, characterised in that the wire, delivered in straight form, is curved into its helical form immediately before the peeling operation.

4. Process as claimed in claim 1 or 2, characterised in that wire taken from a coil and present in helical form is bent straight, preferably straightened, immediately after peeling.

5. Process as claimed in claim 1 or 2, characterised in that wire in helical form taken from a coil is received in helical form after peeling to form another coil.

6. Process according to one of the preceding claims, characterised in that the individual moving turns of wire (14) are separated from one another, in particular, immediately before and/or immediately after peeling.

7. Process as claimed in one of the preceding claims, characterised in that the wire in helical form is guided along a helical curved track (3').

8. Process as claimed in claim 7, characterised in that the turns of wire are helically guided over the outer surface of a partial ring torus.

9. Process as claimed in one of the preceding claims, characterised in that the wire is guided immediately before and/or after peeling.

10. Apparatus for peeling wire (6) which is in a helical configuration during peeling with the turns of wire separated from one another, having a rotating peeling head (2), an unwinding plate (4) receiving the wire coil (3) which is to be peeled and/or a winding plate (5) receiving the coil of wire (3) which has been peeled, whilst the axis or axes (7) of the unwinding plate (4) and/or winding plate (5) is or are located in a plane which also contains the axis (3') of the particular turn of wire (14') during peeling.

11. Apparatus as claimed in claim 10, characterised in that the axis of rotation (10) of the peeling head (2) and the axis (3') of the turn of wire (14') which has just been peeled share a common normal.

12. Apparatus as claimed in claim 10 or 11, characterised in that the axis (10) of the peeling head (2) is at a spacing from the axis of the turn of wire (14') which has just been peeled, equivalent to half the diameter of the turn.

13. Apparatus as claimed in one of claims 10 to 12, characterised in that the axis (3') of the turns of wire (14) is located in the peeling plane of the peeling head (2).

14. Apparatus as claimed in one of claims 10 to 13, characterised in that the axis (3') of the turns of wire (14) is bent at least in a quadrant-shaped configuration and the axis of axes (7) of the unwinding plate (4) and/or winding plate (5) merges or merge therewith.

15. Apparatus as claimed in one of claims 10 to 14 having an unwinding plate (4) and a winding plate (5), characterised in that the axes (7) of the unwinding plate (4) and of the winding plate (5) are parallel to each other and at a spacing from each other.

16. Apparatus as claimed in claim 15, characterised in that the spacing between the axes (7) of the unwinding plate (4) and of the winding plate (5) corresponds to about 1.5 times the diameter of the plates (4 and 5).

17. Apparatus as claimed in claim 15 or 16, characterised in that the unwinding plate (4) and the winding plate (5) can be driven synchronously in opposite directions of rotation to each other.

18. Apparatus as claimed in one of claims 10 to 17, characterised in that the axis (10) of the peeling head (2) is substantially perpendicular to the plane formed by the axis (3') of the turns of wire (14).

19. Apparatus as claimed in claims 10 to 18, characterised in that a bench (8) receives a support frame (11) on which are mounted the peeling head (2) and its drive (12).

20. Apparatus as claimed in one of claims 10 to 19, characterised in that the unwinding plate (4) and/or the winding plate (5) is or are mounted on bearings on the bench (8) which also receives the drive motor (9) driving this plate or these plates.

21. Apparatus as claimed in one of claims 10 to 20, characterised in that immediately in front of and/or immediately behind the peeling head (2) there are guides, of adjustable diameter and position, for the turn of wire (14') which is to be peeled or has been peeled.

22. Apparatus as claimed in claim 21, characterised in that the guides centre the wire (6) in the peeling head (2).

23. Apparatus as claimed in one of claims 10 to 22, characterised in that mechanisms for curving the wire (6) are provided in front of or behind the peeling head (2) in the direction of the turn of the wire (14').

24. Apparauts as claimed in one of claims 10 to 23, characterised in that advance mechanisms for the wire (6) are provided in front of and/or behind the peeling head (2), these advance mechanisms acting on the turn of wire (14') which is just passing through the peeling head (2).

0 082 215